Europäisches Patentamt

European Patent Office

Office européen des brevets

(11) Veröffentlichungsnummer: **0 303 091**
**A2**

## (12) EUROPÄISCHE PATENTANMELDUNG

(21) Anmeldenummer: 88111978.8

(51) Int. Cl.4: **H04M 19/00**

(22) Anmeldetag: 25.07.88

(30) Priorität: 13.08.87 DE 3727028

(43) Veröffentlichungstag der Anmeldung:
15.02.89 Patentblatt 89/07

(84) Benannte Vertragsstaaten:
AT BE CH DE FR GB IT LI NL SE

(71) Anmelder: **Siemens Aktiengesellschaft Berlin und München**
**Wittelsbacherplatz 2**
**D-8000 München 2(DE)**

(72) Erfinder: **Hamer, Jeremy**
**Hanfelderstrasse 17**
**D-8000 München 71(DE)**

(54) **Schaltungsanordnung für eine als Baueinheit vorliegende Teilnehmeranschlussschaltung eines digitalen Zeitmultiplex-Fernmeldenetzes.**

(57) Die Baueinheiten (SLIC) weisen strombegrenzende Schaltungsteile in Form eines Längsreglers oder in Form von Speisewiderständen auf, die den Leitungsstrom der angeschlossenen Teilnehmeranschlußleitung begrenzen, bei kurzer Leitungslänge jedoch eine hohe Verlustleistung bedingen. Es wird daher der Gesamtstrom der Teilnehmeranschlußschaltung (SLIC) oder lediglich der den Speisewiderständen zugeführte Strom über einen zusätzlichen Schaltregler (SR) geliefert.

## FIG 1

EP 0 303 091 A2

## Schaltungsanordnung für eine als Baueinheit vorliegende Teilnehmeranschlußschaltung eines digitalen Zeitmultiplex-Fernmeldenetzes

Die Erfindung betrifft eine Schaltungsanordnung für eine als Baueinheit vorliegende Teilnehmeranschlußschaltung eines digitalen Zeitmultiplex-Fernmeldenetzes, die Bestandteile zur Strombegrenzung des Leitungsstroms der angeschlossenen Teilnehmeranschlußleitung aufweist, die einen strombegrenzenden, ggf. veränderbaren Widerstand umfassen, über den der Speisestrom von der Speisebatterie an die Teilnehmeranschlußleitung gelangt.

Die Speisung von Teilnehmeranschlußleitungen digitaler Fernmeldesysteme erfolgt heutzutage entweder über eine elektronische Teilnehmeranschlußschaltung (SLIC--Subscriber Line Integrated Circuit), die zur Stromregelung des von der Speisebatterie gelieferten Stroms einen Schaltkreis enthält, der als Längsregler wirkt. Eine alternative, derzeit praktizierte Lösung besteht in der Zufuhr des Speisestroms für die Teilnehmeranschlußleitungen über strombegrenzende Speisewiderstände.

Insbesondere dann wenn die zu speisenden Teilnehmeranschlußleitungen relativ kurz sind, entstehen hohe Verluste durch die Strombegrenzung, die außerdem, zumindest bei unter Verwendung von elektronischen Bauelementen· realisierten Teilnehmeranschlußschaltungen zur Verringerung der Lebenserwartung führen.

Um solche Verluste zu reduzieren, wurde bisher so vorgegangen, daß die Begrenzungsschaltungen je nach Länge der angeschlossenen Teilnehmeranschlußleitung von unterschiedlichen Speisespannungen beaufschlagt wurden. Abgesehen davon, daß durch die erforderlichen Umschalter und deren Steuerung einen beträchtli chen Aufwand entsteht, ist auch diese Lösung nicht optimal, da nicht für jede Leitungslänge die passende Spannung zur Verfügung gestellt werden kann.

Die Aufgabe der Erfindung besteht nun darin, unter den eingangs genannten Vorraussetzungen eine Schaltungsanordnung anzugeben, mit deren Hilfe die Verlustleistung bei der Teilnehmerspeisung verringert werden kann.

Erfindungsgemäß geschieht dies dadurch, daß ein nicht zur Teilnehmeranschlußschaltung gehörender Schaltregler vorgesehen ist, über den der strombegrenzende Widerstand der Teilnehmeranschlußschaltung aus der Speisebatterie Speisestrom für die Teilnehmeranschlußleitung zugeführt bekommt.

Wegen der erfindungsgemäß vorgesehenen Verwendung eines Schaltreglers ist die bei der Regelung entstehende Verlustleistung relativ gering, andererseits arbeiten die als Bestandteile der Teilnehmeranschlußschaltung sowieso vorhandenen Bestandteile zur Strombegrenzung in einem optimalen Bereich, in dem sie ebenfalls praktisch keine nennenswerte Verluste verursachen.

Die Einbeziehung eines Schaltreglers anstelle der vorhandenen strombegrenzenden Bestandteile in als Baueinheit realisierte Teilnehmeranschlußschaltungen scheiterte bisher an technologischen Schwierigkeiten.

Sofern eine Teilnehmeranschlußschaltung als elektronischer Baustein realisiert ist, und als strombegrenzenden Bestandteil einen ebenfalls unter Verwendung von Halbleitern aufgebauten Längsregler enthält, wird gemäß einer ersten Ausführungsvariante der Erfindung über den Schaltregler der gesamte von der Teilnehmeranschlußschaltung aufgenommene Strom zugeführt. Es wird hierbei der Umstand ausgenutzt, daß der Eigenstrombedarf solcher Teilnehmeranschlußschaltungen auf Grund der internen Aufbaus von Hause aus konstant ist.

Sofern Teilnehmeranschlußschaltungen vorliegen, bei denen die Teilnehmerspeisung über Speisewiderstände erfolgt, wird über den erfindungsgemäß vorgesehenen Schaltregler der von diesem abgegebene Konstantstrom ·direkt an diese Speisewiderstände geliefert.

Eine weitere Ausgestaltung der Erfindung betrifft die spezielle Realisierung eines für die erfindungsgemäße Schaltungsanordnung verwendbaren Schaltreglers.

Nachstehend wird die Erfindung anhand eines Ausführungsbeispiels unter Bezugnahme auf eine Zeichnung näher erläutert.

In der Zeichnung zeigen:

FIG 1 ein Prinzipschaltbild der erfindungsgemäßen Schaltungsanordnung.

FIG 2 das Schaltbild eines für die erfindungsgemäße Schaltungsanordnung verwendbaren Schaltreglers.

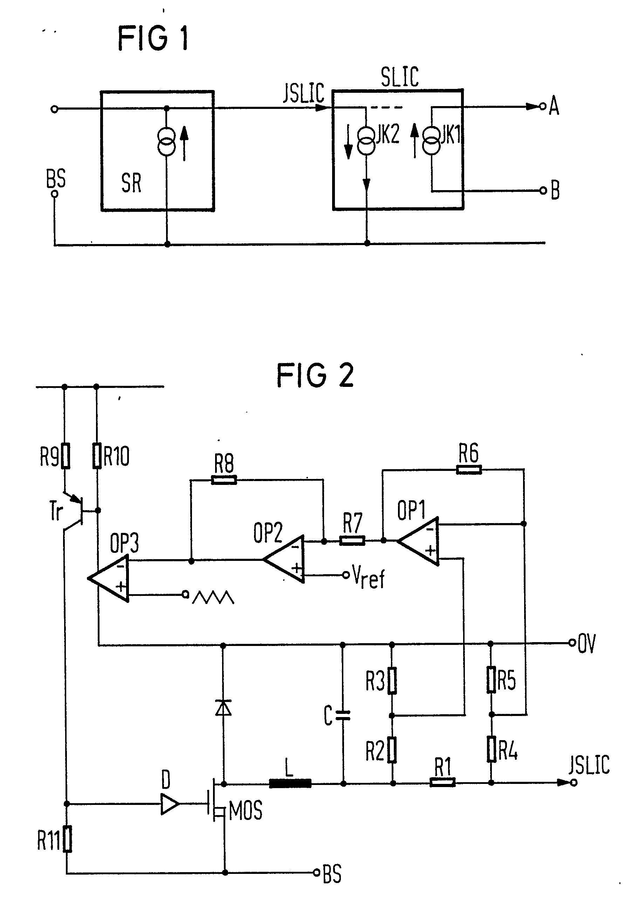

In der FIG 1 ist mit SLIC eine elektronische Teilnehmeranschlußschaltung angedeutet, an deren Ausgängen A und B die Adern a und b einer Teilnehmeranschlußleitung angeschlossen zu denken sind. Diese Teilnehmeranschlußschaltung enthält Bestandteile zur Strombegrenzung des Leitungsstroms auf der Teilnehmeranschlußleitung, was mit dem Konstantstromsymbol IK1 veranschaulicht ist. Im Falle einer elektronischen Teilnehmeranschlußschaltung, wie sie die Teilnehmeranschlußschaltung SLIC ist, gehört zu diesen Bestandteilen ein unter Verwendung eines Halbleiterbauelements realisierter Längsregler. Die erfindungsgemäße Schaltungsanordnung ist jedoch in gleicher Weise verwendbar für den Fall, daß eine Teilnehmeranschlußschaltung verwendet wird, bei der die Teilnehmeranschlußleitung über einen Sprachübertrager an die Teilnehmeranschlußschaltung angekoppelt ist und zur Strombegrenzung hochohmige Speisewiderstände dienen.

Auf Grund des internen Aufbaus der Teilnehmeranschlußschaltung ist der Strom, den diese intern verbraucht konstant, was durch das vom Eingang zu einem Bezugspotential führenden Schaltungspunkts führende Konstantstromquelle IK2 veranschaulicht ist.

Insoweit stellt die Anordnung gemäß FIG 1 das Konzept einer bekannten Teilnehmeranschlußschaltung dar, die vielfach als Baueinheit eingesetzt ist und weiterhin geliefert wird. Wie dargelegt entstehen bei dem Betrieb solcher Teilnehmeran-schlußschaltungen bei kurzen Leitungslängen gro-ße Verlustleistungen im genannten Längsregler, die es durch die erfindungsgemäße Schaltungsanordnung zu verringern gilt.

Es ist nun erfindungsgemäß dem Eingang der Teilnehmeranschlußschaltung SLIC ein von der Speisebatterie BS gespeister Schaltregler SR vorgeschaltet, der demnach der Teilnehmeranschlußschaltung SLIC einen konstanten Strom ISLIC zuführt. Da, wie angedeutet, der Eigenstromverbrauch Ik2 der Teilnehmeranschlußschaltung SLIC konstant ist, gelangt auch an die Teilnehmeranschlußleitung ein konstanter Strom, wobei die interne Verlustleistung, die durch den Längsregler zustande kommt, minimal ist, da dieser Längsregler immer mit der optimalen Eingangsspannung beaufschlagt wird. Bedingt durch das Schaltreglerprinzip des Schaltreglers SR ist die dort entstehende Verlustleistung ebenfalls sehr gering, so daß insgesamt ein Konzept vorliegt, das verlustarm arbeitet.

Sofern es sich bei der vorliegenden Teilnehmeranschlußschaltungsbaueinheit um eine solche handelt, bei der der Speisestrom für die angeschlossene Teilnehmeranschlußleitung über strombegrenzende Speisewiderstände geliefert wird, erfolgt die Einspeisung von Konstantstrom durch den erfindungsgemäß vorgesehenen Schaltregler direkt zu diesen Speisewiderständen. Auch hier ist dann die Verlustleistung innerhalb der Teilnehmeranschlußschaltung unabhängig von der Länge der angeschlossenen Teilnehmeranschlußleitung klein.

Nachstehend wird anhand der FIG 2 der Aufbau eines gemäß weiterer Ausgestaltung der Erfindung realisierten Schaltreglers beschrieben, wie er als Bestandteil der erfindungsgemäßen Schaltungsanordnung verwendet werden kann.

Der Schaltregler gemäß FIG 2 weist einen Meßwiderstand R1 auf, der vom abzugebenden Strom durchflossen wird, also bezogen auf die FIG 1 den Eingangsstrom ISLIC der Teilnehmeranschlußschaltung SLIC liefert.

An die Anschlüsse dieses Meßwiderstandes sind aus Widerständen R2 und R3 bzw. R4 und R5 gebildete Spannungsteiler angeschlossen, die andererseits mit einem Bezugspotential (0V) führenden Schaltungspunkt verbunden sind. Die Teilerpunkte dieser Spannungsteiler sind an die Eingänge eines Differenzverstärkers angeschlossen, der in Form eines Operationsverstärkers OP1 realisiert ist, dessen Ausgang über einen Widerstand R6 mit dem invertierenden Eingang in Verbindung steht.

Dem Operationsverstärker OP1 ist über einen Widerstand R7 ein ebenfalls durch einen rückgekoppelten Operationsverstärker OP2 realisierter Verstärker nachgeschaltet, dessen invertierender Eingang mit dem genannten Widerstand R7 in Verbindung steht und an dessen nicht invertierendem Eingang eine Bezugsspannung Vref liegt.

Der Ausgang des Operationsverstärkers OP2 ist an den invertierenden Eingang eines dritten Operationsverstärkers OP3 angeschlossen, der als Komperator betrieben wird, und an dessen nichtinvertierendem Eingang eine Sägezahnspannung liegt. Die Ausgangsspannung des Operationsverstärkers OP3 steuert einen Transistor TR, an dessen Emitterwiderstand R11 über eine Diode D die Steuerspannung für eine Feldeffekttransistor MOS abgegriffen wird. Die Hauptstromstrecke dieses Feldeffekttransistors ist die eigentliche Schaltstrecke des Schaltverstärkers, sie liegt über eine Induktivität L mit dem vorerwähnten Meßwiderstand R1 in Reihe und im Stromkreis der Speisebatterie BS.

Der durch den Widerstand R1 fließende Strom, der der Teilnehmeranschlußschaltung SLIC zuzuführen ist, erzeugt an den Anschlußpunkten des Widerstandes R1 Spannungen, die durch die erwähnten Spannungsteiler R2/R3 bzw. R4/R5 abgegriffen werden und auf einen geeigneten Eingangspegel für den Operationsverstärker OP1 entsprechenden Wert heruntergeteilt werden. Die dem Spannungsabfall über dem Widerstand R1 entsprechende Spannungsdifferenz an den Eingängen dieses Operationsverstärkers führen zu einem entsprechenden Ausgangssignal, das geringfügig um den Wert der Bezugsspannung Vref schwankt. Der Operationsverstärker OP2 verstärkt diesen der Differenzspannung entsprechenden Wert und der Operationsverstärker OP3 erzeugt durch den Vergleich mit der am nichtinvertierenden Eingang an-liegenden Sägezahnspannung einen Rechteckim-pulszug, dessen Impulsbreite dem vorgenannten Differenzwert und damit dem Strom über den Meßwiderstand R1 entspricht.

Mit dieser Rechteckimpulsspannung wird der Steuertransistor TR angesteuert, der seinerseits den MOS-Schalttransistor entsprechend dieser Rechteckspannung taktet. Auf Grund der Speicherwirkung der Induktivität L gelangt an den Widerstand R1 ein Strom, dessen Wert dem Integral des Pulsstromwertes durch den MOS-Transistor entspricht. Ein Anwachsen des Stromes durch den Widerstand R1 auf Grund von Änderungen des Leitungswiderstandes der Teilnehmeranschlußleitung hat eine Verringerung der Impulsbreite des Steuerstroms für den MOS-Transistor zur Folge, mit dem Ergebnis einer Reduzierung des Stromwertes des Stroms durch den Widerstand R1. Entsprechend umgekehrt liegen die Verhältnisse wenn der Strom durch den Widerstand R1 auf Grund einer Widerstandserhöhung des Widerstands der Teilnehmeranschlußleitung die Tendenz zu geringeren Stromamplituden hat.

**Ansprüche**

1. Schaltungsanordnung für eine als Baueinheit vorliegende Teilnehmeranschlußschaltung eines digitalen Zeitmultiplexfernmeldenetzes, die Bestandteile zur Strombegrenzung des Leitungsstroms der angeschlossenen Teilnehmeranschlußleitung aufweisen, die einen strombegrenzenden, ggf. veränderbaren Widerstand umfassen, über den der Speisestrom von der Speisebatterie an die Teilnehmeranschlußleitung gelangt,**gekennzeichnet durch** einen nicht zur Teilnehmeranschlußschaltung (SLIC) gehörenden Schaltregler (SR) über den der strombegrenzende Widerstand der Teilnehmeranschlußschaltung (SLIC) aus der Speisebatterie (BS) Speisestrom für die Teilnehmeranschlußleitung zugeführt bekommt.

2. Schaltungsanordnung nach Anspruch 1 für eine Teilnehmeranschlußschaltung, die speisestrombegrenzende Bestandteile in Form einer mit Halbleitern realisierten Längsreglerschaltung enthält, **dadurch gekennzeichnet,** daß über den Schaltregler (SR) der gesamte von der Teilnehmeranschlußschaltung (SLIC) aufgenommene Strom zugeführt wird.

3. Schaltungsanordnung nach Anspruch 1, für eine Teilnehmeranschlußschaltung, die speisestrombegrenzende Bestandteile in Form von Speisewiderständen enthält, **dadurch gekennzeichnet,** daß der Schaltregler (SR) den von ihm abgegebenen Konstantstrom direkt an die Speisewiderstände liefert.

4. Schaltungsanordnung nach einem der vorhergehenden Ansprüche, **dadurch gekennzeichnet,** daß der Schaltregler einen vom abzugebenden Strom durchflossenen Meßwiderstand (R1) aufweist, daß er ferner mit zwei Spannungsteilern (R2 R3;R4 R5) versehen ist, die zwischen einem Bezugspotential führenden Schaltungspunkt (0V) und jeweils einem anderen der Anschlüsse des Meßwiderstandes (R1) liegen, daß ferner ein Differenzverstärker (OP1) vorgesehen ist, mit dessen beiden Eingängen jeweils der Teilerpunkt eines der Spannungsteiler (R2 R3;R4 R5) verbunden ist, daß dem Differenzverstärker des Schaltreglers ein Schaltverstärker (OP2) nachgeschaltet ist, an dessen einem Eingang ( + ) eine Bezugsspannung (Vref) liegt, daß die Ausgangsspannung des Verstärkers zusammen mit einer Sägezahnspannung einem Komparator (OP3) zugeführt wird, der damit eine Rechteckspannung liefert, deren Pulsbreite von der Spannungsdifferenz zwischen der Bezugsspannung und der vom Differenzverstärker abgegebenen Spannung entspricht, daß mit der Ausgangsspannung des Komparators ein Steuertransistor (TR) angesteuert wird, der die Steuerspannung für einen Schalttransistor (MOS) liefert, über dessen Hauptstromstrecke und über einer Induktivität (L) und mit dem genannten Meßwiderstand (R1) eine Reihenschaltung bildet, die im Stromkreis der Speisebatterie liegt.

# FIG 1

# FIG 2